# EUROPÄISCHE PATENTSCHRIFT

(11) **EP 0 647 796 B1**
(45) Veröffentlichungstag und Bekanntmachung des Hinweises auf die Patenterteilung: **12.03.1997**
(21) Anmeldenummer: 94107296.9
(22) Anmeldetag: 10.05.1994
(51) Int. Cl.: F16F 15/126

(54) **Schwingungstilger**
Oscillation damper
Amortisseur d'oscillations

(30) Priorität: 08.10.1993 DE 4334316
(43) Veröffentlichungstag der Anmeldung: 12.04.1995
(73) Patentinhaber: Firma Carl Freudenberg, D-69469 Weinheim (DE)
(72) Erfinder: Olbrich, Andreas, D-64756 Mossautal (DE)

(56) Entgegenhaltungen:
- EP-A- 0 409 202
- FR-A- 1 227 604
- FR-A- 2 263 421
- GB-A- 820 042
- GB-A- 1 462 170
- US-A- 1 925 072
- US-A- 3 058 371
- US-A- 3 545 301
- US-A- 4 848 183
- PATENT ABSTRACTS OF JAPAN vol. 13, no. 402 (C-633) 6. September 1989 & JP-A-01 144 485 (TOKAI RUBBER IND) 6. Juni 1989
- PATENT ABSTRACTS OF JAPAN vol. 15, no. 422 (M-1173) 25. Oktober 1991 & JP-A-03 177 639 (N O K MEGURASUTEITSUKU) 1. August 1991
- PATENT ABSTRACTS OF JAPAN vol. 14, no. 237 (M-0976) 21. Mai 1990 & JP-A-02 062 440 (N O K MEGURASUTEITSUKU) 2. März 1990
- PATENT ABSTRACTS OF JAPAN vol. 15, no. 509 (M-1195) 24. Dezember 1991 & JP-A-03 223 543 (KINUGAWA RUBBER IND) 2. Oktober 1991

## Beschreibung

Die Erfindung betrifft ein Verfahren zur Herstellung eines Schwingungstilgers gemäß Oberbegriff des Anspruchs 1. Ein derartiges Verfahren ist aus der FR-A-2 263 421 bekannt.

Der Erfindung liegt die Aufgabe zugrunde, ein Verfahren zur Herstellung eines Schwingungstilgers derart weiterzuentwickeln, daß dieses vereinfacht wird.

Gelöst wird diese Aufgabe durch die Merkmale von Anspruch 1, wobei sich die Einpreßkräfte beim Einfügen der Federringe gegenseitig aufheben. Auf eine vorteilhafte Weiterbildung nimmt Anspruch 2 Bezug.

Zur Lösung sind bei dem erfindungsgemäßen Verfahren die kennzeichnenden Merkmale des Anspruchs 1 vorgesehen.

Nach einer vorteilhaften Ausgestaltung ist es vorgesehen, daß der Federring mit der Welle und/oder dem Trägheitsring verklebt ist. Zur Erzielung einer un-verrückbaren Anpreßung ist es bei einer solchen Ausbildung nicht mehr nötig, sehr hohe Anpreßkräfte zu verwenden. Insbesondere in bezug auf die Verminderung von Schwingungen an einer vergleichsweisen niedrigen Frequenz ist eine solche Ausführung von großem Vorteil.

Eine besonders sichere Verankerung läßt sich bei dem erfindungsgemäßen Schwingungstilger erzielen, wenn der Federring, die Welle und/oder der Trägheitsring im Bereich der einander berührenden Flächen an zumindest einer Stelle mit einer ineinander eingreifenden, reliefartigen Oberflächenstrukturie-rung versehen sind. Die Verwendung eines sekundären Klebstoffes kann bei einer solchen Ausbildung häufig entfallen. Dennoch wird eine gute Festlegung unter Vermeidung einer hohen Anpressung erreicht.

Bei der Montage eines Schwingungstilgers wird zuerst der Trägheitsring der Welle in der bestimmungsgemäßen Weise zugeordnet, wobei im Anschluß daran zwei Federringe in einander entgegengesetzter Richtung in die in axialer Richtung offenen Ausnehmungen am Trägheitsring zwischen diesen und der Welle eingepreßt werden, wodurch sich die erwünschte elastische Abstützung des Trägheitsrings auf der Welle ergibt. Die Einpreßkräfte heben sich beim Einfügen der Federringe gegenseitig auf. Die Montage eines solchen Schwingungstilgers ist daher sehr einfach.

Bei einem Verfahren zur Herstellung des Schwingungstilgers, bei dem der Federring mit der Welle und/oder dem Trägheitsring verklebt wird, hat es sich als vorteilhaft bewährt, wenn zur Durchführung der Verklebung ein Klebstoff in mikroverkapselter Form verwendet und vor dem Zusammenfügen der einzelnen Teile auf die zu verklebenden Oberflächenzonen aufgetragen wird. Die den Klebstoff enthaltenden Mikrokapseln sind von außen trocken, wodurch sich ein solches Verklebungsverfahren sehr sauber durchführen läßt. Die während des Zusammenfügens eintretende gegenseitige Verpreßung der zu verklebenden Oberflächen führt zu einer Zerstörung der Mikrokapseln, was mit einer Aktivierung des enthaltenen Klebstoffes verbunden ist. Diese findet unmittelbar zwischen den zu verklebenden Oberflächen statt und hat deren feste, gegenseitige Verbindung miteinander zur Folge.

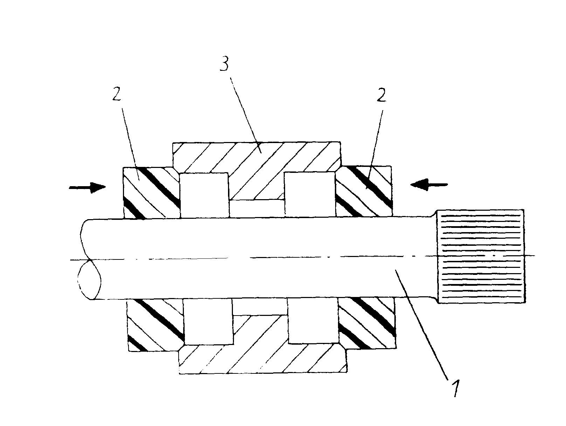

Die Erfindung wird nachfolgend anhand der Zeichnung weiter verdeutlicht.

Durch die Zeichnung wird eine Montage eines Schwingunstilgers gezeigt, bei der zuerst der Trägheitsring 3 der Welle 1 in der bestimmungsgemäßen Weise zugeordnet wird. Im Anschluß daran werden zwei Federringe 2 in einander entgegengesetzter Richtung in die in axialer Richtung offenen Ausnehmungen zwischen dem Trägheitsring und der Welle eingepreßt, wodurch sich die erwünschte, elastische Abstützung des Trägheitsringes 3 auf der Welle 1 ergibt. Die Einpresskräfte heben sich beim Einfügen der Federringe 2 gegenseitig auf. Die Montage eines solchen Schwingungstilgers ist daher sehr einfach.

## Patentansprüche

1. Verfahren zur Herstellung eines Schwingungstilgers für eine um eine Achse rotierende Welle (1), umfassend einen Trägheitsring (3), der durch mindestens eine Federring (2) aus Gummi relativ verdrehbar auf der Welle (1) festgelegt ist, wobei der mindestens eine Federring (2) den Außenumfang der Welle (1) unmittelbar anliegend berührt und durch den Trägheitsring (3) unverdrehbar an die Welle (1) angepreßt ist, dadurch gekennzeichnet, daß zwei solcher Federringe (2) auf der Welle (1) angeordnet und gleichzeitig in einander entgegengesetzter Richtung in jeweils eine, in axialer Richtung offene und jeweils stirnseitig am Trägheitsring (3) angeordnete Ausnehmung eingepreßt werden.

2. Verfahren nach Anspruch 1, bei dem die Federringe (2) mit der Welle (1) und/oder dem Trägheitsring (3) verklebt werden und zur Durchführung der Verklebung ein Klebstoff in mikroverkapselter Form verwendet und vor dem Zusammenfügen der Teile auf zumindest einem der Teile der miteinander in Eingriff zu bringenden Oberflächenzonen aufgetragen wird.

## Claims

1. A method for the production of a vibration absorber for a shaft (1) rotating about an axis, comprising an inertia ring (3) which is fixed in a manner which allows relative rotation on the shaft (1) by at least one spring ring (2) made of rubber, the spring ring or rings (2) being in direct contact with the outer circumference of the shaft (1) and being pressed against the shaft (1) by the inertia ring (3) in a manner which prevents rotation, characterized in that two such spring rings (2) are arranged on the shaft (1) and are pressed simultaneously in opposite directions into respective recesses which are open in the axial direction and are arranged at the ends of the inertia ring (3).

2. A method according to claim 1, in which the spring rings (2) are adhesively bonded to the shaft (1) and/or the inertia ring (3) and an adhesive in microencapsulated form is used to carry out the adhesive bonding and is applied to at least one of the parts of the surface zones to be brought into engagement with one another before the parts are fitted together.

## Revendications

1. Procédé de fabrication d'un amortisseur de vibrations pour un arbre (1) tournant autour d'un axe, comprenant une bague d'inertie (3) qui est fixée sur l'arbre (1) au moyen d'au moins une bague élastique (2) en caoutchouc d'une manière permettant une torsion relative, la - au moins une - bague élastique (2) étant en contact étroit et direct avec la circonférence externe de l'arbre (1) et étant pressée sur l'arbre (1) par la bague d'inertie (3) d'une manière ne permettant pas une torsion, caractérisé en ce que deux bagues élastiques (2) de ce type sont situées sur l'arbre (1) et sont, en même temps, pressées en direction opposée l'une par rapport à l'autre dans un évidement respectif ouvert en direction axiale et situé sur un côté frontal respectif de la bague d'inertie (3).

2. Procédé selon la revendication 1, dans lequel les bagues élastiques (2) sont collées avec l'arbre (1) et/ou avec la bague d'inertie (3) et dans lequel, pour exécuter le collage, un adhésif sous forme microencapsulée est utilisé et appliqué, avant l'assemblage des pièces, sur au moins une des parties des zones superficielles devant être mises en contact les unes avec les autres.
